**Europäisches Patentamt**

**European Patent Office**

**Office européen des brevets**

(19)

(11) **EP 1 309 175 A2**

(12) **EUROPEAN PATENT APPLICATION**

(43) Date of publication:
**07.05.2003 Bulletin 2003/19**

(51) Int Cl.⁷: **H04N 1/60**

(21) Application number: **02023971.1**

(22) Date of filing: **25.10.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(30) Priority: **31.10.2001 JP 2001334930**<br><br>(71) Applicants:<br>• **Fuji Photo Film Co. Ltd.**<br>**Kanagawa 250-0193 (JP)**<br>• **Mitsubishi Heavy Industries, Ltd.**<br>**Tokyo 100-0005 (JP)**<br><br>(72) Inventors:<br>• **Shimazaki, Osamu Fuji Photo Film Co., Ltd.**<br>**Ashigarakami-gun, Kanagawa 258-8538 (JP)** | • **Miyakawa, Tadashi Fuji Photo Film Co., Ltd.**<br>**Ashigarakami-gun, Kanagawa 258-8538 (JP)**<br>• **Tamagawa, Kiyomi Fuji Photo Film Co., Ltd.**<br>**Ashigarakami-gun, Kanagawa 258-8538 (JP)**<br>• **Takemoto, Syuuichi,**<br>**Paper & Printing Machinery Div**<br>**Mihara-shi, Hiroshima 729-0393 (JP)**<br>• **Nagai, Hideaki,**<br>**Paper & Printing Machinery Divis.**<br>**Mihara-shi, Hiroshima 729-0393 (JP)**<br><br>(74) Representative: **Klunker . Schmitt-Nilson . Hirsch**<br>**Winzererstrasse 106**<br>**80797 München (DE)** |

(54) **Printing color management system, and printing color management method**

(57)     Disclosed are a printing color management system and a printing color management method, wherein a plurality of machine plates, which is associated with a plurality of monochromatic images wherein a color image is color-separated, is created in accordance with image data, and an color image is created in such a manner that the plurality of machine plates is used to sequentially print a plurality of monochromatic images on an overlapping basis. The printing color management system and the printing color management method are capable of creating a printed image closely similar in color to a target printed matter, while an image quality of the printed image is guaranteed. A printing section has a color stabilizing mechanism for creating a plurality of color images to be created using a same machine plate with a constant color. A color conversion section has saving functions of saving at least one of a primary color solid component, a secondary color solid component, a primary color of complementary color component, a secondary color of complementary color component, a black color component, and a paper color component, of the color of the color image represented by the image data, before and after the color conversion.

Fig. 3

EP 1 309 175 A2

## Description

BACKGROUND OF THE INVENTION

Field of the Invention

The present invention relates to a printing color management system and a printing color management method, wherein a plurality of machine plates, which is associated with a plurality of monochromatic images wherein a color image is color-separated, is created in accordance with image data, and an color image is created in such a manner that the plurality of machine plates is used to sequentially print a plurality of monochromatic images on an overlapping basis.

Description of the Related Art

Hitherto, when a printing for a color image is performed using a printing machine, there is performed such a matter that a plurality of machine plates, which is associated with a plurality of monochromatic images wherein a color image is color-separated, is created in accordance with image data representative of the color image using an imagesetter or CTP (Computer to Plate), and an color image is created in such a manner that the printing machine sequentially prints a plurality of monochromatic images on an overlapping basis using the plurality of machine plates thus created.

Recently, for example, in a case where a magazine advertisement, which is the same color of color image, appears in a plurality of magazines, printing of the color image is performed in a plurality of printing sites in accordance with the same page data representative of the same color images, that is, a so-called "distribution printing" is performed. In such a case, even if sorts of the printing machines in the printing sites are mutually different, and/or using conditions (e.g. sorts of used inks and qualities of papers) of the printing machines are different, there are needs that coincidence of colors of the magazine advertisements, which are the final printed images, is obtained. The above-mentioned sorts and using conditions of the printing machines are referred to as printing conditions necessary for a certain printing.

Further, there are increased such needs that prior to performing the printing, for example, a designer uses an image output device such as a DDCP (Direct Digital Color Proofing) to create a target image of a color intended on a design, and the color of the target image is reproduced by printed images obtained through the distribution printing in a plurality of printing sites.

By the way, generally, when a printing of a color image is performed using a printing machine, there is performed an estimate of finish of a printed image obtained by printing of a printing machine in such a manner that prior to printing, an image output device such as the DDCP is used to output a proof image closely similar in color to a printed image obtained through printing by the printing machine, and reproduction conditions of colors of the printed image are examined through the proof image.

Further, Japanese Patent Application Laid Open Gazette Hei. 10-155095 discloses a color matching method of reproducing a color of the target image outputted using an image output device such as the DDCP, which is a device for estimating a color of a printed image, on a printed image obtained through printing by a printing machine.

The color matching method disclosed in the Japanese Patent Application Laid Open Gazette Hei. 10-155095 is preferable for reproducing a color of the target image on a printed image. However, in the event that a difference between the printing condition for the printing of the target image and the printing condition for the printing of the printed image is great, there is a possibility that a problem on an image quality of the printed image, for example, a tone jump, and complementary colors tone losses of primary color and secondary color, will occur.

SUMMARY OF THE INVENTION

In view of the foregoing, it is an object of the present invention to provide a printing color management system and a printing color management method capable of creating a printed image closely similar in color to a target printed matter, while an image quality of the printed image is guaranteed.

To achieve the above-mentioned object, the present invention provides a printing color management system comprising:

a machine plate creating section for receiving image data representative of a color image to create a plurality of machine plates associated with a plurality of monochromatic images in which the color image represented by the image data is color-separated;
a printing section for creating the color image in such a manner that the plurality of machine plates created by said machine plate creating section is used to sequentially print the plurality of monochromatic images on a overlapping basis; and
a color conversion section for applying a color conversion to the color image in accordance with a printing profile representative of an association between a color of the color image created by said printing section using the machine plate created by said machine plate creating section, and the image data used when said machine plate creating section creates the machine plates, so that image data representative of the color image subjected to the color conversion is transferred to said machine plate creating section,

wherein said printing section has a color stabilizing mechanism for creating a plurality of color images to be created using a same machine plate with a constant color, and

said color conversion section has saving functions of saving at least one of a primary color solid component, a secondary color solid component, a primary color of complementary color component, a secondary color of complementary color component, a black color component, and a paper color component, of the color of the color image represented by the image data, before and after the color conversion.

The printing color management system according to the present invention as mentioned above has the saving functions of saving at least one of a primary color solid component, a secondary color solid component, a primary color of complementary color component, a secondary color of complementary color component, a black color component, and a paper color component, of the color of the color image represented by the image data, before and after the color conversion.

Applicable to the technology of the saving functions is a technology of implementing both saving of machine plate information and a high accuracy of color matching method, disclosed in Japanese Patent Application Serial No. Hei.11-213485 and Japanese Patent Application Laid Open Gazette No. 2001-119595.

However, according to the technology disclosed in Japanese Patent Application Serial No. Hei. 11-213485 and Japanese Patent Application Laid Open Gazette No. 2001-119595, it is set forth as a premise to create a proof image outputted using an image output apparatus such as a DDCP which is an apparatus for predicting a color of a printing image, and thus reproduction of the color of the printing image obtained by printing of a printing machine is a matter of the highest priority. Accordingly, simple application of those technologies to the printing image obtained by printing of the printing machine putting emphasis on an image quality such as holding form plate information and maximum utilization of a printing color reproduction area would make it difficult to solve problems on image quality of the printing image.

In view of the foregoing, according to the printing color management system of the present invention, the color stabilizing mechanism developed for the purpose of stabilizing colors of a plurality of color images created using the same machine plate, which is disclosed in Japanese Patent Application Serial No. Hei. 11-240137 for instance, is applied to the printing section of the printing color management system according to the present invention, and is combined with the above-mentioned saving functions. This feature makes it possible to guarantee an image quality of the printing image, and also obtain a new effect that a printed image closely similar in color to a target printed matter is created, while an image quality of the printed image is guaranteed.

In the printing color management system according to the present invention as mentioned above, it is preferable that said color conversion section applies to an arbitrary color image such a color conversion that a color of a predetermined color sample is reproduced on the printed matter.

According to the printing color management system having such a color conversion section, it is possible to reproduce on a printed matter a color of an image of a color sample such as a color chart and an original image.

In the printing color management system according to the present invention as mentioned above, it is preferable that the printing color management system further comprises an alarm display section for displaying an alarm in accordance with a comparison of a target profile representative of an association between a color of a predetermined color sample and image data representative of the color sample, with the printing profile.

According to the printing color management system having such an alarm display section, an alarm is issued before the machine plate creating section creates the machine plate. It is possible to prevent the problems on an image quality of a printing image such as tone jump and complementary colors tone losses of primary color and secondary color.

Further, in the printing color management system according to the present invention as mentioned above, it is preferable that said color conversion section corrects the color conversion in accordance with a comparison of a target profile representative of an association between a color of a predetermined color sample and image data representative of the color sample, with the printing profile.

According to the printing color management system wherein the color conversion section corrects the color conversion, it is possible to correct the color conversion to avoid the problems on an image quality of a printing image such as tone jump and complementary colors tone losses of primary color and secondary color.

Further to achieve the above-mentioned object, the present invention provides a printing color management method of reproducing a color of a predetermined color sample on a printed matter, using:

a machine plate creating section for receiving image data representative of a color image to create a plurality of machine plates associated with a plurality of monochromatic images in which the color image represented by the image data is color-separated;

a printing section for creating the color image in such a manner that the plurality of machine plates created by said machine plate creating section is used to sequentially print the plurality of monochromatic images on a overlapping basis; and

a color conversion section for applying a color conversion to the color image in accordance with a printing profile representative of an association between a color of the color image created by said printing section using the machine plate created by said machine plate creating section, and the image data used when said machine plate creating section creates the machine plates, so that image data representative of the color image subjected to the color conversion is transferred to said machine plate creating section,

wherein said printing section has a color stabilizing mechanism for creating a plurality of color images to be created using a same machine plate with a constant color, and

said color conversion section has saving functions of saving at least one of a primary color solid component, a secondary color solid component, a primary color of complementary color component, a secondary color of complementary color component, a black color component, and a paper color component, of the color of the color image represented by the image data, before and after the color conversion.

In the printing color management method according to the present invention as mentioned above, it is preferable that the printing color management method further comprises an alarm display section for displaying an alarm in accordance with a comparison of a target profile representative of an association between a color of a predetermined color sample and image data representative of the color sample, with the printing profile.

Further in the printing color management method according to the present invention as mentioned above, it is preferable that said color conversion section corrects the color conversion in accordance with a comparison of a target profile representative of an association between a color of a predetermined color sample and image data representative of the color sample, with the printing profile.

BRIEF DESCRIPTION OF THE DRAWINGS

Fig. 1 is a schematic constitution view of a printing color management system into which an embodiment of the present invention is incorporated.
Fig. 2 is a constitution view of a printing and proof image creating system into which an embodiment of the present invention is incorporated.
Fig. 3 is a functional block diagram useful for understanding a function of the embodiment of the printing color management system according to the present invention.
Fig. 4 is an explanatory view useful for understanding a black color component saving function included in the saving function shown in Fig. 3.
Fig. 5 is a view useful for understanding an example of a method of implementing the black color component saving function.
Fig. 6 is an explanatory view useful for understanding a primary color of complementary color component saving function and a secondary color of complementary color component saving function included in the saving function shown in Fig. 3.
Fig. 7 is an explanatory view useful for understanding an example of a method of implementing a primary color of complementary color component saving function and a secondary color of complementary color component saving function included in the saving function shown in Fig. 3.
Fig. 8 is an explanatory view useful for understanding a primary color of solid component saving function and a secondary color of solid component saving function included in the saving function shown in Fig. 3.
Fig. 9 is an explanatory view useful for understanding an example of a method of implementing a primary color of solid component saving function and a secondary color of solid component saving function included in the saving function shown in Fig. 3.
Fig. 10 is an explanatory view useful for understanding a paper color component saving function included in the saving function shown in Fig. 3.
Fig. 11 is a graph showing chromaticity of the printed matter printed by a printing machine having no color stabilizing mechanism.
Fig. 12 is a graph showing chromaticity of the printed matter obtained after the color stabilizing processing is performed by the color stabilizing mechanism in the printing section shown in Fig. 3.
Fig. 13 is a view useful for understanding an example of a method of implementing the color stabilizing mechanism.
Fig. 14 is an explanatory view useful for understanding a correcting function of the color conversion in the color conversion section shown in Fig. 3.
Fig. 15 is a view showing a part of a color reproduction area boundary of a target sample and a part of a color reproduction area boundary of a printed matter of a correction object.
Fig. 16 is a graph showing a first example of function T = f (t).
Fig. 17 is a graph showing a second example of function T = f (t).

DETAILED DESCRIPTION OF PREFERRED EMBODIMENTS

Embodiments of the present invention will be described with reference to the accompanying drawings.

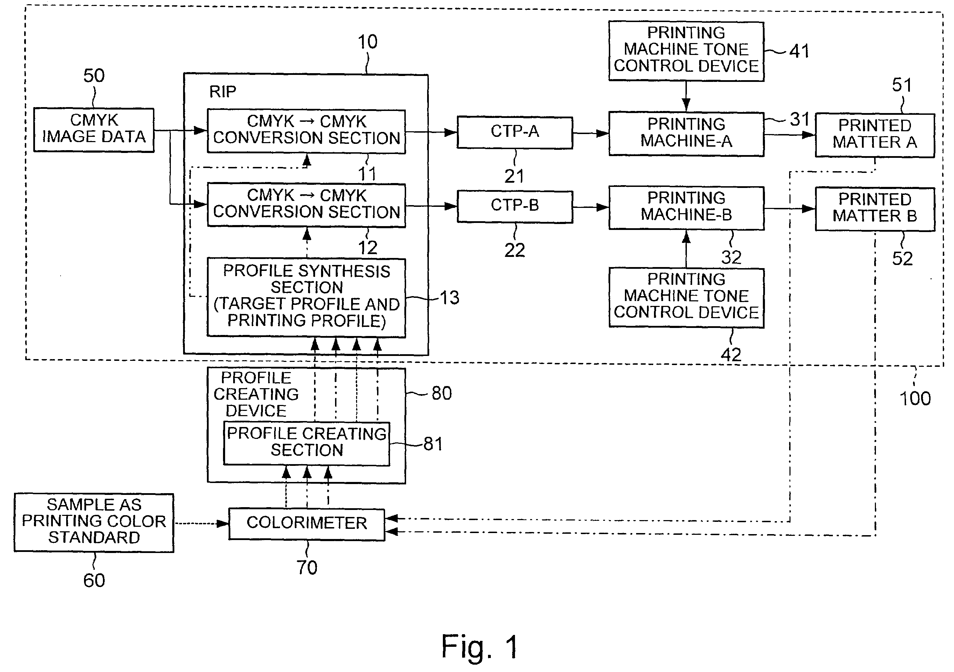

Fig. 1 is a schematic constitution view of a printing color management system into which an embodiment of the present invention is incorporated.
Hereinafter, there will be explained an arrangement of a printing color management system 100 shown in Fig. 1, and then there will be explained an embodiment of a printing color management method of the present invention, too.

The printing color management system 100 shown in Fig. 1 comprises a RIP (Raster Image Processor) 10 for developing page data to raster image data representative of a bit map, CTP (Computer to Plate) corresponding to the machine plate creating section referred to in the present invention, that is, CTP-A21 and CTP-B22, and printing machines corresponding to the printing section referred to in the present invention, that is, printing machine-A 31 and printing machine-B 32. The RIP 10 comprises CMYK-CMYK conversion sections 11 and 12, which correspond to the color conversion section referred to in the present invention, and a profile synthesis section 13. The CMYK-CMYK conversion sections 11 and 12 have each the saving function referred to in the present invention. The printing machine-A 31 and printing machine-B 32 have printing machine tone control devices 41 and 42 corresponding to the color stabilizing mechanism referred to in the present invention, respectively.

The RIP 10 receives color separating image data for four colors consisting of C (cyan), M (magenta), Y (yellow), and B (black), which is referred to as CMYK image data 50. In the RIP 10, an operator performs an electronic page make-up in accordance with the entered CMYK image data 50, and in the CMYK-CMYK conversion section 11, a combination profile $\alpha$ having a format of LUT (Look Up Table), which will be described later, is referred to, so that CMYK image data for printing is created. The CMYK image data for printing is fed to the CTP-A21 to create machine plates for C, M, Y and K plates associated with the entered CMYK image data for printing. The machine plates thus created are mounted on the printing machine-A 31. Ink is applied to the machine plates mounted on the printing machine-A 31 and the applied ink is transferred to a printing sheet, so that a color image is formed on the sheet and whereby a printed matter A51 is created.

In the CMYK-CMYK conversion section 11 of the RIP 10, a combination profile $\beta$ having a format of LUT, which will be described later, is referred to, so that CMYK image data for printing is created. The CMYK image data for printing is fed to the CTP-B 22 to create machine plates for C, M, Y and K plates associated with the entered CMYK image data for printing. The machine plates thus created are mounted on the printing machine-B 32. Ink is applied to the machine plates mounted on the printing machine-B 32 and the applied ink is transferred to a printing sheet, so that a color image is formed on the sheet and whereby a printed matter B52 is created.

Hereinafter, there will be explained the procedure for creating the combination profiles $\alpha$ and $\beta$ having a format of LUT, using the above-mentioned printing color management system 100, a colorimeter 70 and a profile creating device 80, as shown in Fig. 1.

First, there will be explained a method of creating a printing profile associated with the printing process as a correcting object, which will be referred to as the printing profile.

Dot% data for four colors C, M, Y and K are applied to the RIP 10 shown in Fig. 1 while sequentially changing 0%, 10%, ...... 100%, for instance, so that a color chart based on the entered dot% data is created in accordance with the above-mentioned printing procedure using the CTP-A21 and the printing machine-A 31. While the printed matter A 51 shown in Fig. 1 is an image representative of a color chart, assuming that the color chart is printed instead of the printed matter A 51, color patches constituting the color chart are measured by the colorimeter 70. A profile creating section 81 of the profile creating device 80 constructs in accordance with colorimetric values obtained through the measurement for the color patches by the colorimeter 70 a printing profile A representative of the association between coordinate values on a color space consisting of four colors of C, M, Y and K used for printing in the printing machine-A 31 and coordinate values on a colorimetric color space (L*a*b* space).

In a similar creating fashion to that of the printed matter A 51 representative of the color chart, the CTP-B22 and the printing machine-B 32 are use to create the printed matter B 52 representative of the color chart, and color patches constituting the color chart are measured by the colorimeter 70. A profile creating section 81 of the profile creating device 80 constructs in accordance with colorimetric values obtained through the measurement for the color patches by the colorimeter 70 a printing profile B representative of the association between coordinate values on a color space consisting of four colors of C, M, Y and K used for printing in the printing machine-B 32 and coordinate values on a colorimetric color space (L*a*b* space).

Those profiles A and B have each a format of LUT. And when the profiles A and B received image data defined by C, M, Y and K, the profiles A and B convert the image data of C, M, Y and K into image data defined by L*a*b*.

Next, there will be explained a method of creating a target profile associated with a printing process as a target, which will be referred to as the target profile.

A sample 60 as a printing color standard is a color chart created using a DDCP (Direct Digital Color Proofing) not illustrated, which outputs an image in accordance with dot% data for C, M, Y and K, instead of the CTP-A21 and the printing machine-A 31 shown in Fig. 1, in a similar fashion to the method of creating the printed matter A 51 representative of the above-mentioned color chart. Color patches constituting the color chart are measured by the colorimeter 70. A profile creating section 81 of the profile creating device 80 constructs in accordance with colorimetric values obtained through the measurement for the color patches by the colorimeter 70 a target profile representative of the association between coordinate values on a color space consisting of four colors of C, M, Y and K used for the sample 60 as printing color standard, which is the color chart created by the DDCP, and coordinate values on a colorimetric color space (L*a*b* space).

The target profile also has a format of LUT. And when the target profile received dot% data of C, M, Y and K, the target profile converts the dot% data of C, M, Y and K into colorimetric data of L*a*b*.

When the dot% data of C, M, Y and K for the printing color standard is converted into the colorimetric data of $L*a*b*$ by the target profile, and then the colorimetric data of L*a*b* is converted into the dot% data of C, M, Y and K for the printing through the reverse conversion by the printing profile A, it is possible that the CTP-A21 and the printing machine-A 31 print the printed matter A 51, which is the same as the sample 60 as printing color standard in color, in accordance with the dot% data of C, M, Y and K for the printing thus created. The combination profile α, which represents with a format of LUT a conversion consisting of a combination of the conversion by the target profile and the reverse conversion by the printing profile A, is a color conversion definition for converting image data defined in a CMYK color space for the printing color standard into image data defined in a CMYK color space for the printing, and is created in the profile synthesis section 13 of the RIP 10 shown in Fig. 1. The combination profile α thus created is installed in the CMYK-CMYK conversion section 11 of the RIP 10.

The combination profile β is created in the profile synthesis section 13 of the RIP 10 shown in Fig. 1 in accordance with the target profile and the printing profile B in a similar fashion to the creating method of the above-mentioned combination profile α. The combination profile β thus created is installed in the CMYK-CMYK conversion section 12 of the RIP 10.

While the present embodiment shows an example in which the profile synthesis section 13 of the RIP 10 shown in Fig. 1 creates the combination profile α and the combination profile β, it is not always necessary for the present invention to create the combination profile α and the combination profile β in the RIP 10, and it is acceptable that the profile creating device 80 has a profile synthesis section to create the combination profile α and the combination profile β in the profile synthesis section of the profile creating device 80. In this case, the combination profiles α and β created in the profile synthesis section of the profile creating device 80 are installed in the CMYK-CMYK conversion sections 11 and 12 of the RIP 10, respectively.

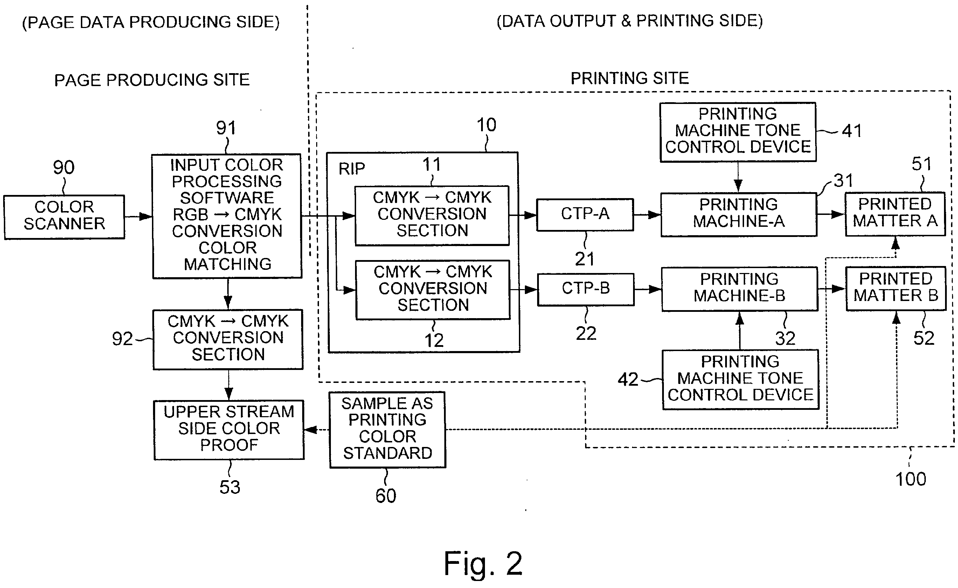

Fig. 2 is a constitution view of a printing and proof image creating system into which an embodiment of the present invention is incorporated.

Fig. 2 shows a printing and proof image creating system comprising a page producing site of a page data producing side and a printing site of a data output and printing side.

The page producing site shown in Fig. 2 is equipped with a color scanner 90 for reading an original image. RGB-CMYK conversion color matching of an input color processing software 91 creates color separation image data for four colors of C, M, Y and K representative of the original image thus read associated with color separation image data for three colors of R (red), G (green) and B (blue) representative of the original image. The color separation image data for four colors of C, M, Y and K created in the input color processing software 91 corresponds to the CMYK image data 50 shown in Fig. 1 and referred to as the CMYK image data hereinafter. Installed in a CMYK-CMYK conversion section 92 shown in Fig. 2 is a combination profile for converting image data defined in the CMYK color space for the printing color standard into image data defined in the CMYK color space for the color proof, which combination profile is created in accordance with the creation method similar to that of the combination profile α explained referring to Fig. 1. When the CMYK image data is fed to the CMYK-CMYK conversion section 92, an upper stream side color proof 53, which is the same in color as a sample 60 as the printing color standard, can be obtained.

The printing site shown in Fig. 2 corresponds to the printing color management system 100 shown in Fig. 1, and comprises the RIP 10, the CTP-A21, the CTP-B22, the printing machine-A 31, and the printing machine-B 32. The RIP 10 comprises the CMYK-CMYK conversion sections 11 and 12. The CMYK-CMYK conversion sections 11 and 12 have each a saving function referred to in the present invention, which will be explained later. The printing machine-A 31 has the printing machine tone control device 41, and the printing machine-B 32 has the printing machine tone control device 42. Functions of those elements are the same as those of the same name of elements in the printing color management system 100 shown in Fig. 1, and thus the redundant explanation will be omitted.

Thus, the use of the printing and proof image creating system shown in Fig. 2 makes it possible to obtain the upper stream side color proof 53, which is the same in color as a sample 60 as the printing color standard, the printed matter A51, and the printed matter B52.

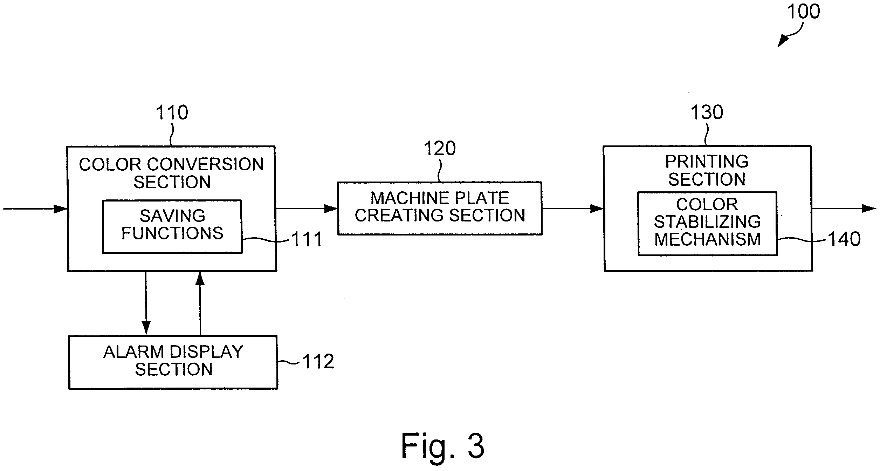

Fig. 3 is a functional block diagram useful for understanding a function of the embodiment of the printing color management system according to the present invention.

The printing color management system 100 comprises a machine plate creating section 120, a printing section 130, a color conversion section 110, and an alarm display section 112. The printing section 130 has a color stabilizing function 140. The color conversion section 110 has a saving function 111.

The machine plate creating section 120 has functions of the CTP-A21 and the CTP-B22 shown in Fig. 1 and Fig. 2. Upon receipt of image data representative of a color image, the machine plate creating section 120 creates a plurality of machine plates corresponding to a plurality of monochromatic images in which a color image represented by the image data is color-separated.

The printing section 130 has functions of the printing machine-A 31 and the printing machine-B 32 shown in Fig. 1 and Fig. 2, and creates a color image in such a manner that the plurality of machine plates created by the machine plate creating section 120 is used to print the plurality of monochromatic images on a sequential overlapping basis. The printing section 130 has the color stabilizing function 140 corresponding to the printing machine tone control devices 41 and 42 shown in Fig. 1 and Fig. 2, for creating a plurality of color images to be created using the same machine plate with a constant color.

The color conversion section 110 has functions of the CMYK-CMYK conversion sections 11 and 12 shown in Fig. 1 and Fig. 2, and applies a color conversion to a color image in accordance with a printing profile representative of the association between a color of a color image created by the printing section 130 using the machine plate created by the machine plate creating section 120 and image data to be used when the machine plate creating section 120 creates the machine plate, so that image data representative of the color image subjected to the color conversion is transferred to the machine plate creating section 120. According to the present embodiment, the color conversion section 110 applies to an arbitrary color image such a color conversion that a color of a predetermined color sample such as the sample 60 as the printing color standard shown in Fig. 1 and Fig. 2 is reproduced on the printed matter.

Further, according to the present embodiment, the color conversion section 110 has the saving function 111 for saving before and after the color conversion a primary color solid component, a secondary color solid component, a primary color of complementary colors component, a secondary color of complementary colors component, a black color component, and a paper color component of colors, of a color image represented by image data.

The alarm display section 112 displays an alarm in accordance with a comparison of a target profile representative of the association between a color of a predetermined color sample such as the sample 60 as the printing color standard shown in Fig. 1 and Fig. 2 and image data representative of the color sample, with the printing profile. According to the present embodiment, as will be described later, the alarm is displayed in the event that a color difference of the solid image portion is not less than 10; in the event that a color difference of the paper color of image portion is not less than 0.3; and in the event that a density difference of the solid image portion is not less than 0.3.

The color conversion section 110 has further a function of correcting the color conversion, as will be described later in detail, in the event that the alarm display section 112 displays an alarm.

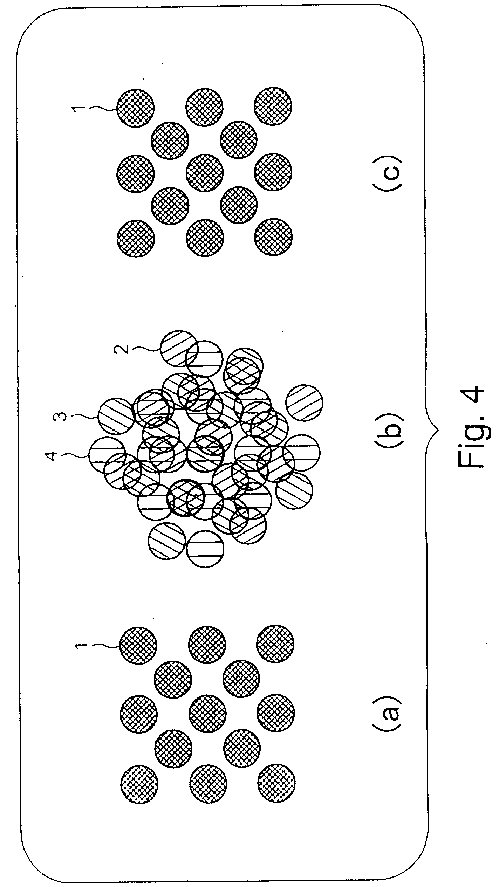

Fig. 4 is an explanatory view useful for understanding a black color component saving function included in the saving function 111 shown in Fig. 3.

Part (a) of Fig. 4 exemplarily shows an image portion consisting of halftone dots 1 formed with the black color component only, of the target image of the color intended on a design, which is created by a designer using DDCP (not illustrated).

Part (b) of Fig. 4 shows an image portion corresponding to the image portion shown in the part (a) of Fig. 4, of the color image printed by the printing machine in the printing color management system having no black color component saving function, not illustrated, as described in the column of "Description of the Related Art", in accordance with the target image shown in the part (a) of Fig. 4. The designer intends to provide the halftone dots 1 formed with the black color component only, as shown in the part (a) of Fig. 4, nevertheless the halftone dots 1 formed with the black color component only is inadvertently replaced by halftone dots 2, 3 and 4 of three colors of C, M and Y, as shown in the part (b) of Fig. 4.

Part (c) of Fig. 4 shows an image portion corresponding to the image portion shown in the part (a) of Fig. 4, of the color image printed by the printing section 130 in the printing color management system 100 (cf. Fig. 3) having the black color component saving function, in accordance with the target image shown in the part (a) of Fig. 4. Thus, according to the printing color management system 100 (cf. Fig. 3) having the black color component saving function, it is possible to obtain the halftone dots 1 formed with the black color component only, as shown in the part (c) of Fig. 4, which are equivalent to the halftone dots 1 formed with the black color component only, as shown in the part (a) of Fig. 4.

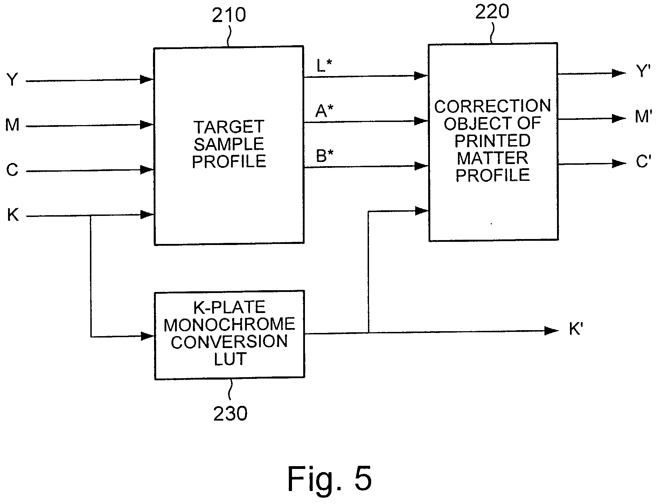

Fig. 5 is a view useful for understanding an example of a method of implementing the black color component saving function.

Dot% data (C, M, Y and K) for C, M, Y and K representative of the color image created by the designer is converted into colorimetric data (L*, a*, b*) for L* a* b∗ by a target sample profile 210, and the colorimetric data (L*, a*, b*) for L* a* b* is converted into dot% data (C', M' and Y') for C, M and Y for printing by a correction object of printed matter profile 220. Where the correction object of printed matter profile 220 is one wherein K-plate is fixed to the values, for example, 0%, 10%, ...... 100%, and LUT representative of the association between the dot% data for C, M and Y and the colorimetric data is created. Dot% data (K) for K-plate monochrome is converted into dot% data (K') for K-plate monochrome for printing by a K-plate monochrome conversion LUT 230. Thus, the conversion of the dot% data for K-plate monochrome by the independent K-plate monochrome conversion LUT 230 makes it possible to avoid that the dot% data for K-plate monochrome is formed with halftone dots consisting of three colors of C, M and Y by the color matching processing.

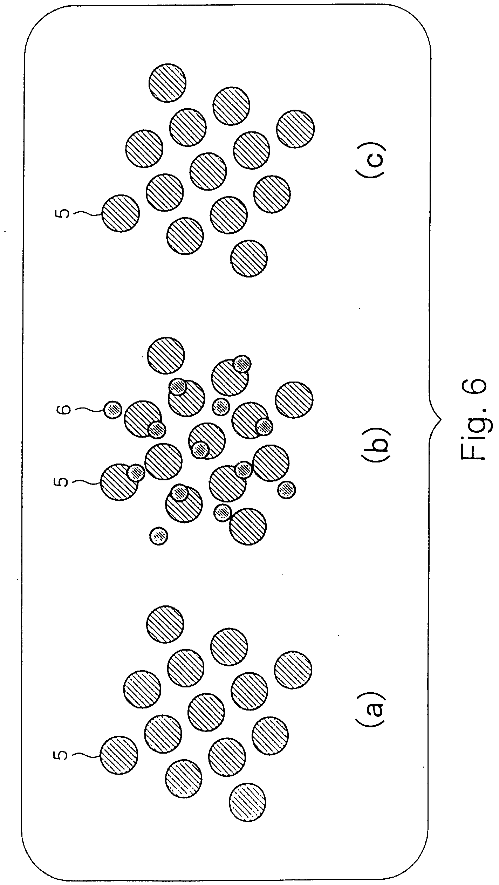

Fig. 6 is an explanatory view useful for understanding a primary color of complementary color component saving function and a secondary color of complementary color component saving function included in the saving function 111 shown in Fig. 3.

Part (a) of Fig. 6 exemplarily shows an image portion consisting of halftone dots 5 formed with a C-plate color component only, of the target image of the color intended on a design, which is created by a designer using DDCP (not illustrated).

Part (b) of Fig. 6 shows an image portion corresponding to the image portion shown in the part (a) of Fig. 6, of the color image printed by the printing machine in the printing color management system having no primary color of complementary color component saving function and secondary color of complementary color component saving function, not illustrated, as described in the column of "Description of the Related Art", in accordance with the target image shown in the part (a) of Fig. 6. The designer intends to provide the halftone dots 5 formed with the C-plate color component only, as shown in the part (a) of Fig 6, nevertheless halftone dots 6 consisting of M-plate color are inadvertently added to the halftone dots 5 formed with the C-plate color component only, as shown in the part (b) of Fig. 6, and as a result, image quality is changed.

Part (c) of Fig. 6 shows an image portion corresponding to the image portion shown in the part (a) of Fig. 6, of the color image printed by the printing section 130 (cf. Fig. 3) in the printing color management system 100 (cf. Fig. 3) having the primary color of complementary color component saving function and the secondary color of complementary color component saving function, in accordance with the target image shown in the part (a) of Fig. 6. Thus, according to the printing color management system 100 (cf. Fig. 3) having the primary color of complementary color component saving function and the secondary color of complementary color component saving function, it is possible to obtain the halftone dots 5 formed with the C-plate color only, as shown in the part (c) of Fig. 6, which are equivalent to the halftone dots 5 formed with the C-plate color only, as shown in the part (a) of Fig. 6, whereby the intended image quality is reproduced while the color reproduction is sacrificed somewhat.

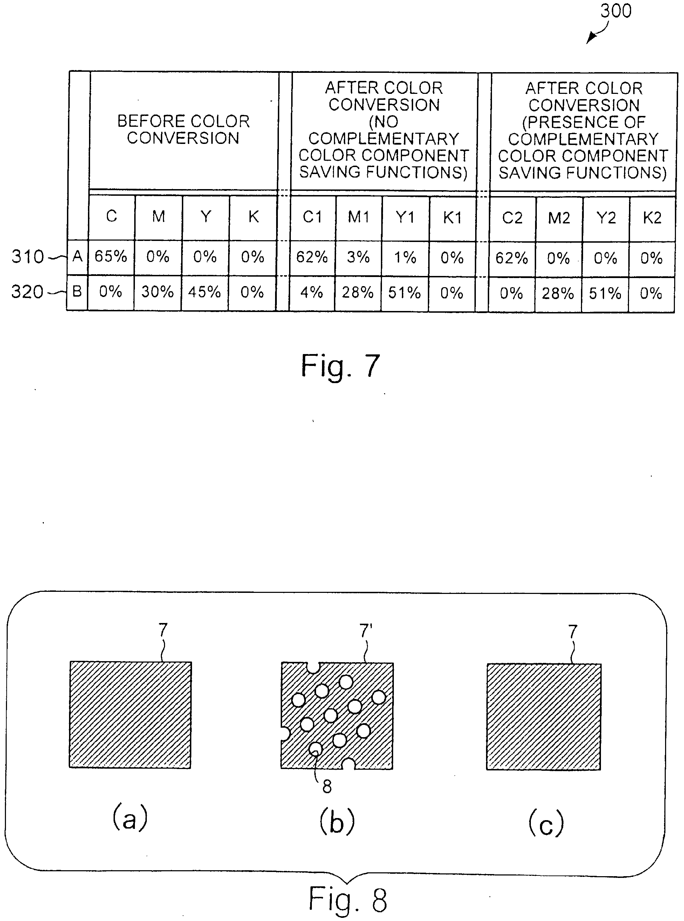

Fig. 7 is an explanatory view useful for understanding an example of a method of implementing a primary color of complementary color component saving function and a secondary color of complementary color component saving function included in the saving function shown in Fig. 3.

In the event that dot% data (C, M, Y and K) for C, M, Y and K representative of the color image created by the designer is converted into colorimetric data (L*, a*, b*) for L* a* b* by a target sample profile, and then the colorimetric data (L*, a*,b*) for L* a* b* is converted into dot% data (C', M', Y' and K') for C, M, Y and K for printing by a correction object of printed matter profile and the like (cf. Fig. 5), when two or three of the dot% data for C, M, Y and K before the color conversion are 0%, the dot% data, which are 0% before the color conversion, are forcibly held to 0% after the color conversion, too.

For example, a column a 310 of table 300 shown in Fig. 7 shows an example of the primary color of complementary color component saving function, wherein before the conversion, dot% data for M, Y and K are 0%. When such dot% data for C, M, Y and K are printed by the printing machine in the printing color management system having no primary color of complementary color component saving function and secondary color of complementary color component saving function, not illustrated, as described in the column of "Description of the Related Art", it may happen that the dot% data for M and Y are 3% and 1%, respectively. To the contrary, according to the presence of the primary color of complementary color component saving function, the dot% data for M, Y and K, which are 0% before the color conversion, are forcibly held to 0% after the color conversion, too.

A column b 320 of table 300 shown in Fig. 7 shows an example of the secondary color of complementary color component saving function, wherein before the conversion, dot% data for C and K are 0%. When such dot% data for C, M, Y and K are printed by the printing machine in the printing color management system having no primary color of complementary color component saving function and secondary color of complementary color component saving function, not illustrated, as described in the column of "Description of the Related Art", it may happen that the dot% data for C is 4% for instance. To the contrary, according to the presence of the secondary color of complementary color component saving function, the dot% data for C and K, which are 0% before the color conversion, are forcibly held to 0% after the color conversion, too.

Fig. 8 is an explanatory view useful for understanding a primary color of solid component saving function and a secondary color of solid component saving function included in the saving function 111 shown in Fig. 3.

Part (a) of Fig. 8 exemplarily shows a C-plate solid color portion 7 formed with a C-plate 100%, of the target image of the color intended on a design, which is created by a designer using DDCP (not illustrated).

Part (b) of Fig. 8 shows a portion corresponding to the C-plate solid color portion 7 shown in the part (a) of Fig. 8, of the color image printed by the printing machine in the printing color management system having no primary color of solid component saving function and secondary color of solid component saving function, not illustrated, as described in the column of "Description of the Related Art", in accordance with the target image shown in the part (a) of Fig. 8. The designer intends to provide the C-plate formed with the C-plate 100%, as shown in the part (a) of Fig. 8, nevertheless the C-plate formed with the C-plate 100% is replaced by the C-plate 7' of dot% data less than 100%, as shown in the part (b) of Fig. 8, and as a result, holes 8 are formed and image quality is changed.

Part (c) of Fig. 8 shows a portion corresponding to the C-plate solid color portion 7 shown in the part (a) of Fig. 8, of the color image printed by the printing section 130 (cf. Fig. 3) in the printing color management system 100 (cf. Fig. 3) having the primary color of solid component saving function and the secondary color of solid component saving function, in accordance with the target image shown in the part (a) of Fig. 8. Thus, according to the printing color management system 100 (cf. Fig. 3) having the primary color of solid component saving function and the secondary color of solid component saving function, it is possible to obtain the C-plate solid formed with the C-plate 100%, as shown in the part (c) of Fig. 8, which are equivalent to the C-plate solid formed with the C-plate 100% intended by the designer, as shown in the part (a) of Fig. 8, whereby the intended image quality is reproduced.

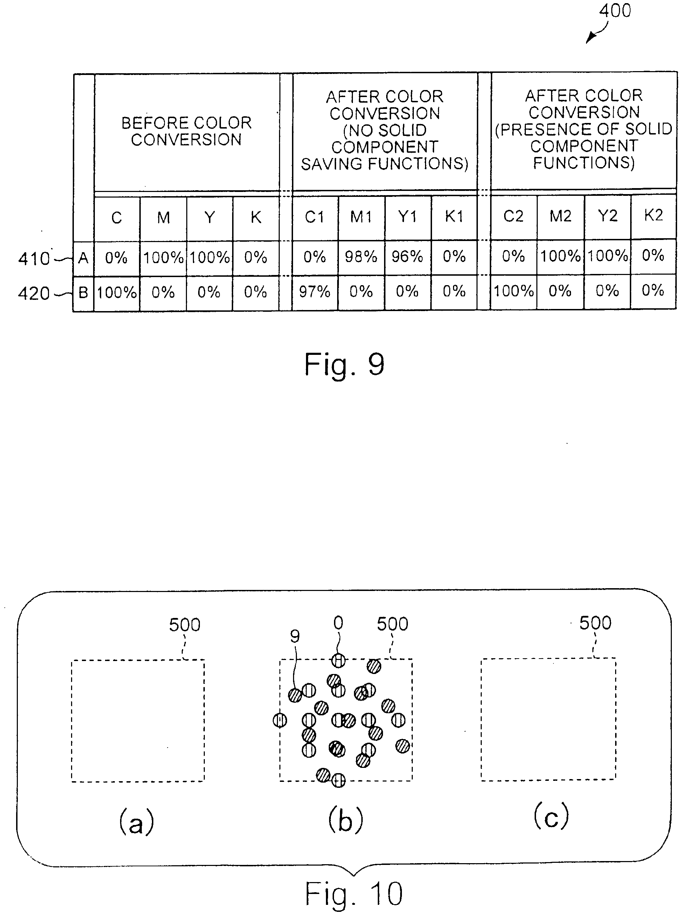

Fig. 9 is an explanatory view useful for understanding an example of a method of implementing a solid component saving function for the primary color and a solid component saving function for the secondary color included in the saving function shown in Fig. 3.

In the event that dot% data (C, M, Y and K) for C, M, Y and K representative of the color image created by the designer is converted into colorimetric data (L*, a*, b*) for L* a* b* by a target sample profile, and then the colorimetric data (L*, a*, b*) for L* a* b* is converted into dot% data (C', M', Y' and K') for C, M, Y and K for printing by a correction object of printed matter profile and the like (cf. Fig. 5), when two or three of the dot% data for C, M, Y and K before the color conversion are 0%, and other dot% data are 100%, the dot% data, which are 100% before the color conversion, are forcibly held to 100% after the color conversion, too.

For example, a column a 410 of table 400 shown in Fig. 9 shows an example of the secondary color of complementary color component saving function, wherein before the conversion, dot% data for C and K are 0%, and dot% data for M and Y are 100%. When such dot% data for C, M, Y and K are printed by the printing machine in the printing color management system having no primary color of solid component saving function and secondary color of solid component saving function, not illustrated, as described in the column of "Description of the Related Art", it may happen that the dot% data for M and Y are 98% and 96%, respectively. To the contrary, according to the presence of the secondary color of complementary color component saving function, the dot% data for M and Y, which are 100% before the color conversion, are forcibly held to 100% after the color conversion, too.

A column b 420 of table 400 shown in Fig. 7 shows an example of the primary color of solid component saving function, wherein before the conversion, dot% data for M, Y and K are 0%, and dot% data for C is 0%. When such dot% data for C, M, Y and K are printed by the printing machine in the printing color management system having no primary color of solid component saving function and secondary color of solid component saving function, not illustrated, as described in the column of "Description of the Related Art", it may happen that the dot% data for C is 97% for instance. To the contrary, according to the presence of the primary color of solid component saving function, the dot% data for C, which are 100% before the color conversion, are forcibly held to 100% after the color conversion, too.

Fig. 10 is an explanatory view useful for understanding a paper color component saving function included in the saving function 111 shown in Fig. 3.

Part (a) of Fig. 10 exemplarily shows a portion wherein all dot% data for C, M, Y and K are 0%, of the target image of the color intended on a design, which is created by a designer using DDCP (not illustrated), that is, a paper color portion 500 wherein a color of an image is represented by a paper color.

Part (b) of Fig. 10 shows a portion corresponding to the paper color portion 500 shown in the part (a) of Fig. 10, of the color image printed by the printing machine in the printing color management system having no paper color component saving function, not illustrated, as described in the column of "Description of the Related Art", in accordance with the target image shown in the part (a) of Fig. 10. The designer intends to provide that all dot% data for C, M, Y and K are 0%, as shown in the part (a) of Fig. 10, nevertheless halftone dots 9 and 0 for two colors of M and Y are slightly mixed into the paper color portion 500, as shown in the part (b) of Fig. 10.

Part (c) of Fig. 10 shows a portion corresponding to the paper color portion 500 shown in the part (a) of Fig. 10, of the color image printed by the printing section 130 (cf. Fig. 3) in the printing color management system 100 (cf. Fig. 3) having the paper color component saving function, in accordance with the target image shown in the part (a) of Fig. 10. Thus, according to the printing color management system 100 (cf. Fig. 3) having the paper color component saving function, it is possible to reproduce the paper color portion 500 wherein all dot% data for C, M, Y and K are 0%.

As an example of a method of implementing the paper color component saving function, there is raised a method set forth below.

In the event that dot% data (C, M, Y and K) for C, M, Y and K representative of the color image created by the designer is converted into colorimetric data (L*, a*, b*) for L* a* b* by a target sample profile, and then the colorimetric data (L*, a*, b*) for L* a* b* is converted into dot% data (C', M', Y' and K') for C, M, Y and K for printing by a correction object of printed matter profile and the like (cf. Fig. 5), when all the dot% data for C, M, Y and K before the color conversion are 0%, all the dot% data for C, M, Y and K, which are 0% before the color conversion, are forcibly held to 0% after the color conversion, too.

Incidentally, according to the present embodiment, when the dot% data for C, M, Y and K are converted into the dot% data for C', M', Y' and K', a combination of a four-dimensional LUT and an interpolation computation is used to perform the conversion, and the functions explained in conjunction with Fig. 6 to Fig. 10 are implemented in such a manner that data for a predetermined portion of a four-dimensional LUT is forcibly replaced by 0%. Thus, the function of the interpolation computation makes it hard to involve the problem on an image quality such as tone jump.

Thus, inclusion of the functions explained in conjunction with Fig. 6 to Fig. 10 into the saving function 111 shown in Fig. 3 makes it possible to reproduce the intended image quality in the printing section 130.

Next, there will be explained the color stabilizing mechanism 140 incorporated into the printing section 130 in order to guarantee the effect of the saving function 111

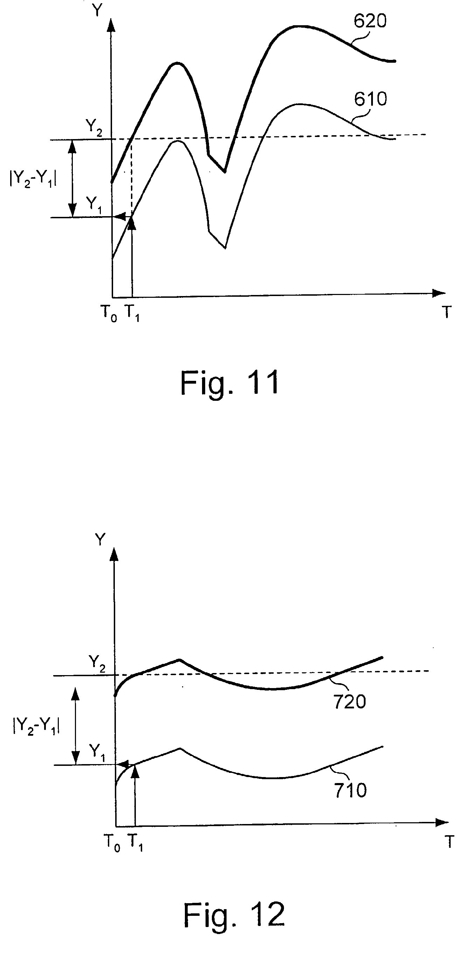

Fig. 11, Fig. 12 and Fig. 13 are explanatory views useful for understanding the color stabilizing mechanism 140 in the printing section 130 shown in Fig. 3.

Fig. 11 is a graph showing chromaticity of the printed matter printed by a printing machine having no color stabilizing mechanism, wherein a fine line graph 610 denotes chromaticity of the printed matter when the color correction by the color conversion section is not performed, and a thick line graph 620 denotes chromaticity of the printed matter when the color correction by the color conversion section is performed.

A vertical axis y of the graph shown in Fig. 11 denotes chromaticity of the printed matter, and a horizontal axis t denotes time. A symbol mark $t_0$ denotes a starting time. A symbol mark $t_1$ denotes a time in which a color chart is subjected to sampling after a printing machine is operated. A symbol mark $y_2$ denotes chromaticity (target chromaticity) of the above-mentioned printing color standard.

Assuming that a color correction is performed in accordance with the color chart subjected to sampling in the time $t_1$, a printing profile is created in accordance with chromaticity $y_1$ subjected to sampling, and a combination profile is also created, so that the combination profile performs a color correction to remove the color difference $|y_2 - y_1|$ between the chromaticity $y_1$ and the target chromaticity $y_2$. Thus, in the sampling time $t_1$, a deviation from the target colorimetry is solved.

However, according to the printed matter printed by the printing machine having no color stabilizing mechanism, mechanical dispersion on chromaticity is not solved. Thus, even if the deviation from the target chromaticity in an arbitrary time (here the sampling time $t_1$) is solved, there is a possibility that the deviation from the target chromaticity is greatly increased in another time, as shown in Fig. 11. For this reason, even if guarantee of colors and image quality of printed matters is attempted by the data processing such as the above-mentioned color conversion and saving function, it would be meaningless owing to the deviation of the chromaticity.

Fig. 12 is a graph showing chromaticity of the printed matter obtained after the color stabilizing processing is performed by the color stabilizing mechanism 140 in the printing section 130 shown in Fig. 3, wherein a fine line graph 710 denotes chromaticity of the printed matter when the color correction by the color conversion section is not performed, and a thick line graph 720 denotes chromaticity of the printed matter when the color correction by the color conversion section is performed.

A vertical axis y of the graph shown in Fig. 12 denotes chromaticity of the printed matter, and a horizontal axis t denotes time. A symbol mark $t_0$ denotes a starting time. A symbol mark $t_1$ denotes a time in which a color chart is subjected to sampling after a printing machine is operated. A symbol mark $y_2$ denotes the chromaticity (target chromaticity) of the above-mentioned printing color standard.

Assuming that a color correction is performed in accordance with the color chart subjected to sampling in the time $t_1$, a printing profile is created in accordance with chromaticity $y_1$ subjected to sampling, and a combination profile is also created, so that the combination profile performs a color correction to remove the color difference $|y_2 - y_1|$ between the chromaticity $y_1$ and the target chromaticity $y_2$. Thus, in the sampling time $t_1$, a deviation from the target colorimetry is solved.

As shown in Fig. 12, according to the printed matter obtained after the color stabilizing processing is performed, when the deviation from the target chromaticity in an arbitrary time (here the sampling time $t_1$) is solved, there is obtained a printed matter of chromaticity approximate to the target chromaticity in another time, too

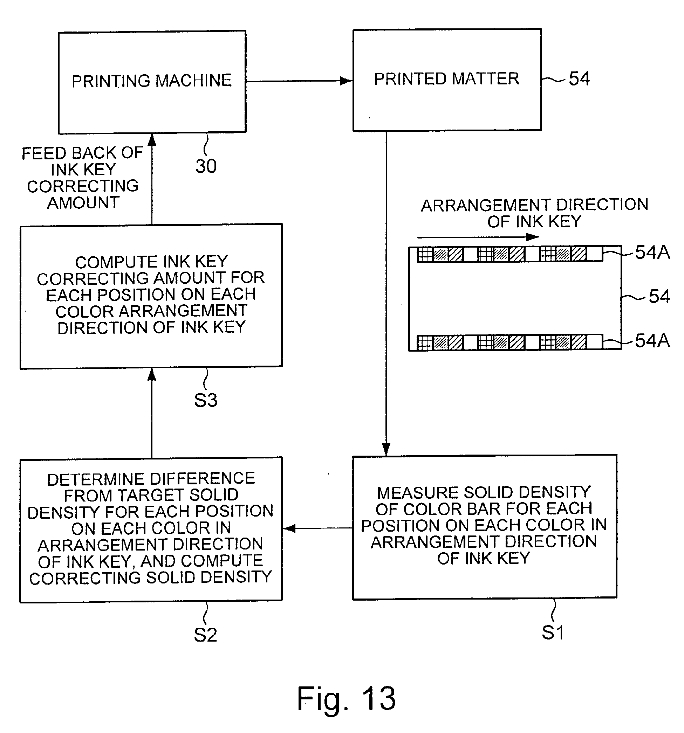

Fig. 13 is a view useful for understanding an example of a method of implementing the color stabilizing mechanism.

First, a printed matter 54 is extracted from a printing machine 30 at an arbitrarily time in operation of the printing machine. On the extracted printed matter 54, there are printed color bars 54a in the same direction as an arrangement direction of ink keys (not illustrated), provided on the printing machine 30. Solid density for each color and each position is measured by a colorimeter (not illustrated) (step S1)

Next, there is determined a difference between the solid density for each color and each position of the color bars 54a measured by the colorimeter and the target solid density for color stabilizing, so that correction solid density is computed (step S2).

Further, there is computed from the correction solid density an ink key correction amount for each color and each position in the arrangement direction of the ink keys provided on the printing machine, and the ink key correction amount is fed back to the ink keys provided on the printing machine 30 (step S3).

This color stabilizing processing is repeated, so that colors of a plurality of color images created using the same machine plate are stabilized.

Stabilizing the colors of the color images makes it possible that guarantee of colors and image quality of the printed matter by the above-mentioned color conversion and the saving functions is effective.

Lastly, there will be explained details of the alarm display section 112 (cf. Fig. 3) and a method of correcting a color conversion by the color conversion section 110 in the event that the alarm display section 112 issues an alarm.

According to the present embodiment, the alarm display section 112 compares the above-mentioned target profile and the above-mentioned printing profile to compute color variations. That is, colorimetric values associated with specific dot% data (for example, 100% solid in dot% data, 0% paper color in dot% data) are determined by the target profile and the printing profile, and those colorimetric values are compared with one another to compute a color difference. According to the present embodiment, the alarm is issued in the event that the color difference thus computed is 10 or more on the solid image portion, and in the event that the color difference thus computed is 0.3 or more on the image portion of the paper color.

On the solid image portion, a density difference is computed in accordance with the colorimetric values obtained from the target profile and the printing profile, utilizing that the colorimetric values can be converted into the density data. According to the present embodiment, the alarm is issued and displayed also in the event that the density difference on the solid image portion thus computed is 0.3 or more.

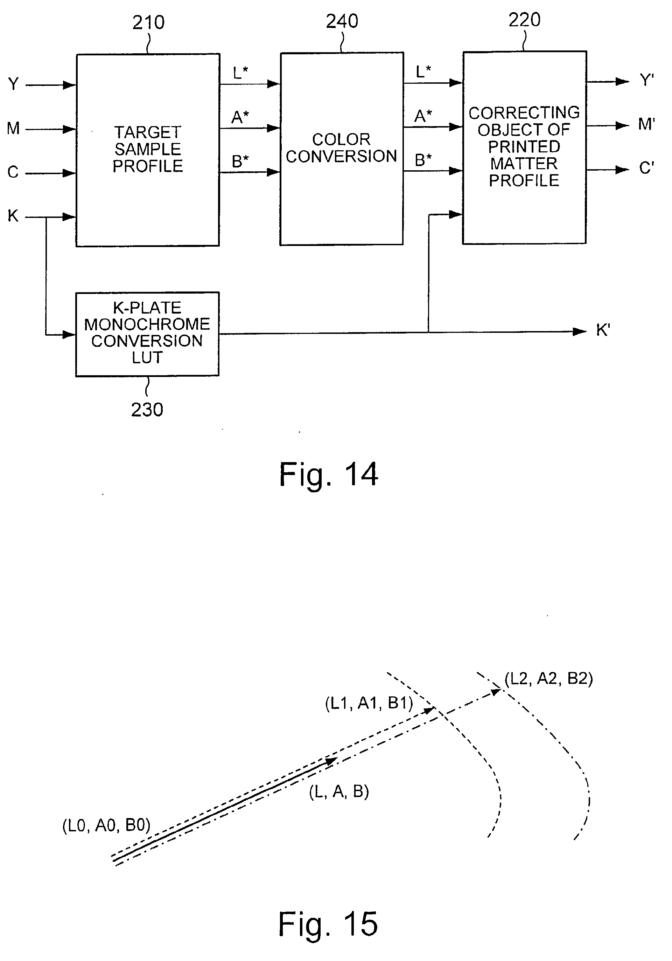

Fig. 14, Fig. 15, Fig. 16 and Fig. 17 are views useful for understanding an example of a method of correcting a color conversion when an alarm is issued.

Fig. 14 is an explanatory view useful for understanding a correcting function of the color conversion in the color conversion section 110 shown in Fig. 3.

Fig. 14 shows a chromaticity conversion LUT 240 for correcting the color conversion. In the event that the alarm is not issued, the chromaticity conversion LUT 240 serves as a non-conversion LUT, that is, the function shown in Fig. 14 is equivalent to that of Fig. 5.

The alarm is issued, as mentioned above, in the event that the color difference or the density difference is over a predetermined value, that is, in the event that colors of ink used in the printing section (cf. Fig. 3) are greatly varied. A great variation of colors of ink to be use causes a great difference between the color reproduction area of the target sample and the color reproduction area of the printed matter of the correction object.

By the way, generally, in order to improve the image quality of a printed image obtained by printing in a printing machine, it is preferable to use the whole areas of the color reproduction areas capable of being represented by ink used in the printing machine. And thus, according to the chromaticity conversion LUT 240 of the present embodiment, in the event that an alarm is issued, that is, in the event that there is a great difference between the color reproduction area of the target sample and the color reproduction area of the printed matter of the correction object, there is performed a conversion for effectively use the whole areas of the color reproduction area of the printed matter of the correction object.

Hereinafter, there will be explained the procedure of creating the chromaticity conversion LUT 240 shown in Fig. 14, using an example wherein the color reproduction area of the target sample is narrower than the color reproduction area of the printed matter of the correction object. The chromaticity conversion LUT 240 represents the association between coordinate values on the color space representing output values of the target sample profile 210 and coordinate values on the color space representing input values of the correction object of printed matter profile 220.

Fig. 15 is a view showing a part of a color reproduction area boundary of a target sample and a part of a color reproduction area boundary of a printed matter of a correction object.

The "color reproduction area boundary of a target sample" means a set of coordinate values on the color space representing output values of the target sample profile 210 (cf. Fig. 14) wherein of the dot% data for C, M, Y and K, any one is 100%, or any one is 0%.

The "color reproduction area boundary of a printed matter of a correction object" means a set of coordinate values on the color space representing input values of the correction object of printed matter profile 220 (cf. Fig. 14) wherein of the dot% data for C, M, Y and K, any one is 100%, or any one is 0%.

According to the present embodiment, the coordinate values are concerned with the situation wherein the chromaticity of the paper color of the target sample and the chromaticity of the paper color of the printed matter of the correction object are equal chromaticity (L0, a0, b0), and all the dot% data for C, M, Y and K are 0%.

When the chromaticity conversion LUT 240 (cf. Fig. 14) is created, first, coordinate values for an arbitrary lattice point on the color space, on which the output values of the target sample profile 210 (cf. Fig. 14) are represented, are given by (L, a, b), and a line coupling (L0, a0, b0) with (L, a, b) is extended in a direction that saturation is clear, so that an intersection point (L1, a1, b1) of the extended line with the color reproduction area boundary of a target sample, and an intersection point (L2, a2, b2) of the extended line with the color reproduction area boundary of a printed matter of a correction object are obtained.

Chromaticity (L', a', b') of a printed matter of a correction object after the color correction to chromaticity (L, a, b) of a target sample are computed in accordance with the following equations.

$$L' = L0 + T * (L1 - L0)$$

$$a' = a0 + T * (a1 - a0)$$

$$b' = b0 + T * (b1 - b0)$$

where T is a function defined by

$$t = (L - L0)/(L1 - L0)$$

$$T = f(t)$$

The function T can be arbitrarily set up not so as to involve problems on an image quality such as tone jump and complementary colors tone losses of primary color and secondary color, when the whole areas of the color reproduction areas capable of being represented by ink used in the printing machine are used.

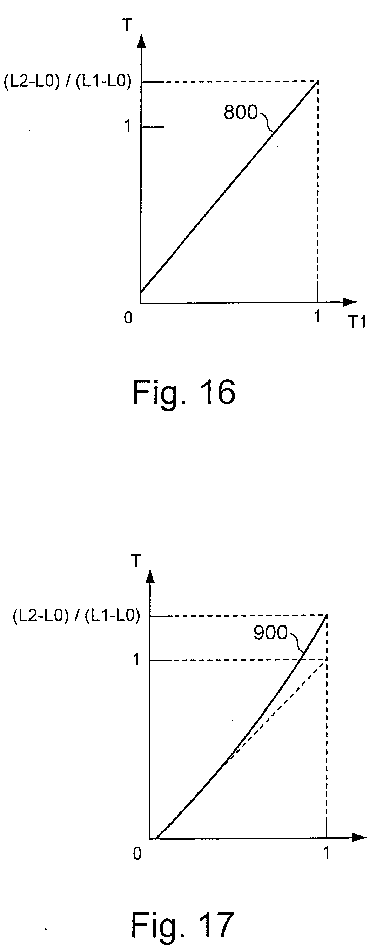

Hereinafter, there will be explained examples of the function T in conjunction with graphs shown in Fig. 16 and Fig. 17.

Fig. 16 is a graph showing a first example of function T = f (t).

A horizontal axis of the graph shown in Fig. 16 denotes chromaticity before the chromaticity conversion, and the vertical axis denotes chromaticity after the chromaticity conversion.

In Fig. 16, there is shown such a conversion that chromaticity in the color reproduction area of the target sample is expanded on a linear basis into chromaticity in the color reproduction area of the printed matter of the correction object in accordance with the function T = f (t) represented by a solid line 800 shown in Fig. 16.

Fig. 17 is a graph showing a second example of function T = f (t).

A horizontal axis of the graph shown in Fig. 17 denotes chromaticity before the chromaticity conversion, and the vertical axis denotes chromaticity after the chromaticity conversion.

In Fig. 17, there is shown a conversion that chromaticity in the color reproduction area of the target sample is changed in such a manner that the chromaticity is close to non-conversion in the vicinity of the paper color, and as the chromaticity approaches the color reproduction area boundary, the chromaticity approaches the boundary of the color reproduction area of the printed matter of the correction object, in accordance with the function T = f (t) represented by a solid line 900 shown in Fig. 17.

Incidentally, according to the present embodiment, there is explained an example in which the color conversion section has the saving functions of saving the primary color solid component, the secondary color solid component, the primary color of complementary color component, the secondary color of complementary color component, the black color component, and the paper color component, of the color of the color image represented by the image data, before and after the color conversion. However, it is acceptable that the color conversion section has the saving functions of saving at least one of the primary color solid component, the secondary color solid component, the primary color of complementary color component, the secondary color of complementary color component, the black color component, and the paper color component, of the color of the color image represented by the image data, before and after the color conversion.

As mentioned above, according to the present invention, there are provided a printing color management system and a printing color management method capable of creating a printed image closely similar in color to a target printed matter, while an image quality of the printed image is guaranteed.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

**Claims**

1. A printing color management system comprising:

a machine plate creating section for receiving image data representative of a color image to create a plurality of machine plates associated with a plurality of monochromatic images in which the color image represented by the image data is color-separated;
a printing section for creating the color image in such a manner that the plurality of machine plates created by said machine plate creating section is used to sequentially print the plurality of monochromatic images on a overlapping basis; and
a color conversion section for applying a color conversion to the color image in accordance with a printing profile representative of an association between a color of the color image created by said printing section using the machine plate created by said machine plate creating section, and the image data used when said machine plate creating section creates the machine plates, so that image data representative of the color image subjected to the color conversion is transferred to said machine plate creating section,

wherein said printing section has a color stabilizing mechanism for creating a plurality of color images to be created using a same machine plate with a constant color, and

said color conversion section has saving functions of saving at least one of a primary color solid component, a secondary color solid component, a primary color of complementary color component, a secondary color of complementary color component, a black color component, and a paper color component, of the color of the color image represented by the image data, before and after the color conversion.

2. A printing color management system according to claim 1, wherein said color conversion section applies to an arbitrary color image such a color conversion that a color of a predetermined color sample is reproduced on the printed matter.

3. A printing color management system according to claim 1, further comprising an alarm display section for displaying an alarm in accordance with a comparison of a target profile representative of an association between a color of a predetermined color sample and image data representative of the color sample, with the printing profile.

4. A printing color management system according to claim 1, wherein said color conversion section corrects the color conversion in accordance with a comparison of a target profile representative of an association between a color of a predetermined color sample and image data representative of the color sample, with the printing profile.

5. A printing color management method of reproducing a color of a predetermined color sample on a printed matter, using:

a machine plate creating section for receiving image data representative of a color image to create a plurality of machine plates associated with a plurality of monochromatic images in which the color image represented by the image data is color-separated;
a printing section for creating the color image in such a manner that the plurality of machine plates created by said machine plate creating section is used to sequentially print the plurality of monochromatic images on a overlapping basis; and
a color conversion section for applying a color conversion to the color image in accordance with a printing profile representative of an association between a color of the color image created by said printing section using the machine plate created by said machine plate creating section, and the image data used when said machine plate creating section creates the machine plates, so that image data representative of the color image subjected to the color conversion is transferred to said machine plate creating section,

wherein said printing section has a color stabilizing mechanism for creating a plurality of color images to be created using a same machine plate with a constant color, and

said color conversion section has saving functions of saving at least one of a primary color solid component, a secondary color solid component, a primary color of complementary color component, a secondary color of complementary color component, a black color component, and a paper color component, of the color of the color image represented by the image data, before and after the color conversion.

6. A printing color management method according to claim 5, further comprising an alarm display section for displaying an alarm in accordance with a comparison of a target profile representative of an association between a color of a predetermined color sample and image data representative of the color sample, with the printing profile.

7. A printing color management method according to claim 5, wherein said color conversion section corrects the color conversion in accordance with a comparison of a target profile representative of an association between a color of a predetermined color sample and image data representative of the color sample, with the printing profile.

Fig. 1

PAGE PRODUCING SITE

PRINTING SITE

91

90
COLOR SCANNER

INPUT COLOR PROCESSING SOFTWARE RGB → CMYK CONVERSION COLOR MATCHING

RIP 10

11
CMYK → CMYK CONVERSION SECTION

12
CMYK → CMYK CONVERSION SECTION

CTP-A 21

CTP-B 22

PRINTING MACHINE TONE CONTROL DEVICE 41

PRINTING MACHINE-A 31

PRINTING MACHINE-B 32

PRINTING MACHINE TONE CONTROL DEVICE 42

PRINTED MATTER A 51

PRINTED MATTER B 52

92
CMYK → CMYK CONVERSION SECTION

UPPER STREAM SIDE COLOR PROOF 53

SAMPLE AS PRINTING COLOR STANDARD 60

100

EP 1 309 175 A2

Fig. 2

100

110

COLOR CONVERSION
SECTION

SAVING
FUNCTIONS

111

120

MACHINE PLATE
CREATING SECTION

130

PRINTING
SECTION

COLOR
STABILIZING
MECHANISM

140

ALARM DISPLAY
SECTION

112

Fig. 3

Fig. 4

210

220

Y →

M →

C →

K →

```
          ┌──────────┐
          │  TARGET  │  L* ──────→
          │  SAMPLE  │  A* ──────→
          │  PROFILE │  B* ──────→
          └──────────┘
```

```
┌──────────────┐
│  CORRECTION  │
│  OBJECT OF   │ ──→ Y'
│   PRINTED    │ ──→ M'
│   MATTER     │ ──→ C'
│   PROFILE    │
└──────────────┘
```

```
┌──────────────┐
│   K-PLATE    │
│  MONOCHROME  │ ──────→ K'
│  CONVERSION  │
│     LUT      │
└──────────────┘
```

230

# Fig. 5

Fig. 6

300

| | BEFORE COLOR CONVERSION | | | | AFTER COLOR CONVERSION (NO COMPLEMENTARY COLOR COMPONENT SAVING FUNCTIONS) | | | | AFTER COLOR CONVERSION (PRESENCE OF COMPLEMENTARY COLOR COMPONENT SAVING FUNCTIONS) | | | |
|---|---|---|---|---|---|---|---|---|---|---|---|---|
| | C | M | Y | K | C1 | M1 | Y1 | K1 | C2 | M2 | Y2 | K2 |
| A | 65% | 0% | 0% | 0% | 62% | 3% | 1% | 0% | 62% | 0% | 0% | 0% |
| B | 0% | 30% | 45% | 0% | 4% | 28% | 51% | 0% | 0% | 28% | 51% | 0% |

310 ~ A

320 ~ B

## Fig. 7

(a)        (b)        (c)

## Fig. 8

|  | BEFORE COLOR CONVERSION | | | | AFTER COLOR CONVERSION (NO SOLID COMPONENT SAVING FUNCTIONS) | | | | AFTER COLOR CONVERSION (PRESENCE OF SOLID COMPONENT FUNCTIONS) | | | |
|---|---|---|---|---|---|---|---|---|---|---|---|---|
|  | C | M | Y | K | C1 | M1 | Y1 | K1 | C2 | M2 | Y2 | K2 |
| A | 0% | 100% | 100% | 0% | 0% | 98% | 96% | 0% | 0% | 100% | 100% | 0% |
| B | 100% | 0% | 0% | 0% | 97% | 0% | 0% | 0% | 100% | 0% | 0% | 0% |

Fig. 9

Fig. 10

Fig. 11

Fig. 12

PRINTING MACHINE → PRINTED MATTER ～54

30

FEED BACK OF
INK KEY
CORRECTING
AMOUNT

COMPUTE INK KEY
CORRECTING AMOUNT FOR
EACH POSITION ON EACH
COLOR ARRANGEMENT
DIRECTION OF INK KEY

S3

DETERMINE DIFFERENCE
FROM TARGET SOLID
DENSITY FOR EACH POSITION
ON EACH COLOR IN
ARRANGEMENT DIRECTION
OF INK KEY, AND COMPUTE
CORRECTING SOLID DENSITY

S2

MEASURE SOLID DENSITY
OF COLOR BAR FOR EACH
POSITION ON EACH COLOR IN
ARRANGEMENT DIRECTION
OF INK KEY

S1

ARRANGEMENT DIRECTION
OF INK KEY

～54A
～54
～54A

Fig. 13

210

240

220

Y →

M →

C →

| TARGET SAMPLE PROFILE | L* → | COLOR CONVERSION | L* → | CORRECTING OBJECT OF PRINTED MATTER PROFILE | → Y' |
| | A* → | | A* → | | → M' |
| | B* → | | B* → | | → C' |

K →

K-PLATE MONOCHROME CONVERSION LUT

→ K'

230

Fig. 14

(L1, A1, B1)

(L2, A2, B2)

(L, A, B)

(L0, A0, B0)

Fig. 15

Fig. 16

Fig. 17